# EUROPÄISCHE PATENTSCHRIFT

(11) **EP 0 455 945 B1**
(45) Veröffentlichungstag und Bekanntmachung des Hinweises auf die Patenterteilung: **06.04.1994**
(21) Anmeldenummer: 91102746.4
(22) Anmeldetag: 25.02.1991
(51) Int. Cl.: F16B 12/40, F16B 7/04

(54) **Befestigungseinrichtung zur lösbaren Verbindung einer Strebe an einer Säule**
Fastening means for a releasable connection of a strut on a column
Système ou fixation pour l'attachement démontable d'une entretoise à une colonne

(30) Priorität: 09.05.1990 CH 1579/90
(43) Veröffentlichungstag der Anmeldung: 13.11.1991
(73) Patentinhaber: USM U. SCHAERER SOEHNE AG, CH-3110 Münsingen (CH)
(72) Erfinder: Graf, Rudolf, CH-3510 Konolfingen (CH)
(74) Vertreter: Keller, René, Dr.

(56) Entgegenhaltungen:
- BE-A- 566 256
- DE-A- 2 403 832
- DE-A- 2 555 787
- DE-B- 2 138 782
- DE-U- 8 813 241
- FR-A- 2 602 838
- US-A- 3 003 646

## Beschreibung

Die Erfindung betrifft eine Befestigungseinrichtung gemäß dem Oberbegriff des Patentanspruchs 1, eine Säule gemäß dem Oberbegriff des Patentanspruchs 8 und eine Strebe gemäß dem Oberbegriff des Patentanspruchs 9.

Eine Befestigungseinrichtung zur lösbaren Befestigung einer Strebe am Mantel einer runden Säule mit einem den Mantel umschließenden Haltering ist aus der BE-A 566 256 bekannt. Der Haltering hat eine zentrische Durchgangsbohrung, in die mehrere radiale Gewindebohrungen münden, in welche die Streben mit an ihren Enden angeordneten Gewinden einschraubbar sind. Durch die zentrische Durchgangsbohrung wird die Säule gesteckt. Jedes Strebenende wird soweit in die Gewindebohrung eingeschraubt, bis deren Stirnseite am Säulenmantel ansteht und hierdurch den Haltering auf dem Säulenmantel festklemmt.

Eine weitere Befestigungseinrichtung ist aus der US-A 3 003 646 bekannt. Die bekannte Befestigungseinrichtung dient ebenfalls zur lösbaren Befestigung einer Strebe am Mantel einer runden Säule mittels eines aus zwei übereinander angeordneten Ringen bestehenden Halterings. Im Gegensatz zur BE-A 566 256 haben die Streben am Strebenende ein zentrisches Innengewinde, mit dem sie auf das Gewinde einer im Haltering gehaltenen Schraube aufschraubbar sind, bis die jeweilige Stirnseite des das Innengewinde aufweisenden Strebenendes auf den beiden Rändern des Halterings festklemmt.

Die aus der FR-A 2 602 838 bekannte, gattungsgemäße Befestigungseinrichtung hat einen Haltering, an dem die Enden von Streben gehalten werden. Um den Säulenmantel sind zwei zusammenwirkende Halbringe mit einem oberen und einem unteren Steg als Haltering festgespannt. An den Strebenenden ist eine Halteplatte angeschweißt, an der jeweils zwei einen hakenförmigen Ansatz tragende Verbindungselemente festgeschraubt sind. Die Haken werden mit einer weiteren Schraube auf den Steg festgezogen, wobei zwischen den Haken und dem Säulenmantel ein Zwischenraum verbleibt, d. h. die Haken liegen nur am Steg an.

Eine nicht gattungsgemäße Befestigungseinrichtung ist aus der DE-U 8 813 241 bekannt und dient zur Befestigung von Strebenenden bzw. Säulenenden mit Hilfe einer Knotenkugel. Mit dieser Befestigungseinrichtung können nur Rohrenden miteinander verbunden werden. Eine Befestigung von Strebenenden am Mantel einer Säule ist nicht möglich.

Aufgabe der Erfindung ist es, eine verdrehsichere Befestigungseinrichtung für ein Strebenende am Mantel einer Säule zu schaffen, welche große Dreh- und Biegemomente vom Strebenende auf die Säule übertragen kann und die Befestigung mehrerer Strebenenden auf gleicher Höhe ermöglicht.

Die Lösung der Aufgabe hinsichtlich der Befestigungseinrichtung ist Gegenstand des Patentanspruchs 1, hinsichtlich der Säule Gegenstand des Patentanspruchs 8 und hinsichtlich der Strebe Gegenstand des Patentanspruchs 9.

Gegenstand der Ansprüche 2 bis 7 sind bevorzugte Ausführungsformen der Befestigungseinrichtung.

Im folgenden wird ein Beispiel der erfindungsgemäßen Befestigungseinrichtung, der Säule sowie der Strebe anhand von Zeichnungen näher erläutert. Es zeigen:
- Fig. 1: eine perspektivische Darstellung einer Säule und vier mit einer Befestigungseinrichtung an ihr befestigten Strebenenden,
- Fig. 2: einen Längsschnitt durch die Säule, die Befestigungseinrichtung und zwei Strebenenden entlang der Linie II - II in **Figur** **1**,
- Fig. 3: eine Draufsicht auf einen Haltering der Befestigungseinrichtung,
- Fig. 4.: eine perspektivische Darstellung eines Keilstücks eines Keilstückpaares der Befestigungseinrichtung, und
- Fig. 5.: eine perspektivische Darstellung des anderen Keilstücks des Keilstückpaares.

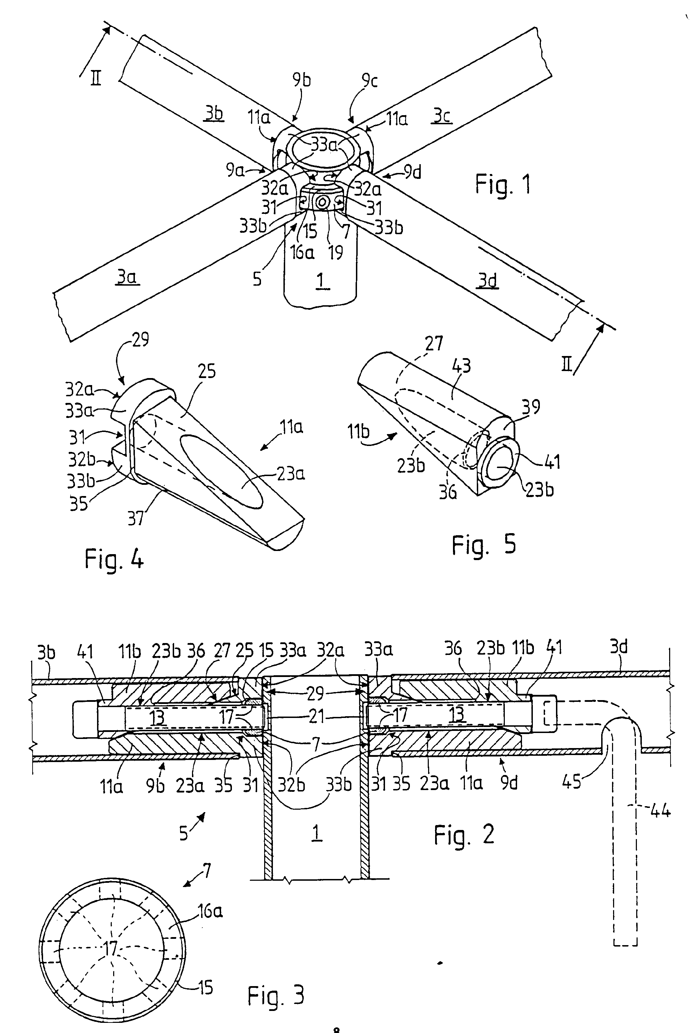

In **Figur 1** ist eine senkrecht stehende, hohle Säule **1** dargestellt, an der vier hohle, einen ovalen Querschnitt aufweisende Streben **3a** bis **3d** auf gleicher Höhe rechtwinklig zueinander mit einer Befestigungseinrichtung **5** befestigt sind. Die Befestigungseinrichtung **5** hat einen an der Säule **1** befestigbaren, zylindrischen Haltering **7** und pro zu befestigender Strebe **3a** bis **3d** ein Keilstückpaar **9a** bis **9d** mit je zwei Keilstücken **11a** und **11b,** wie im Längsschnitt in **Figur 2** dargestellt, und je eine Spannschraube **13** mit einem Innensechskant im Schraubenkopf.

Der Innendurchmesser des Halterings **7**, wie er in einer Draufsicht in **Figur 3** dargestellt ist, ist um einer Toleranz größer als der Außendurchmesser der Säule **1**. Die Außenfläche ist mit je einer Fase **15** zu den Seitenflächen **16a** bzw. **16b** angefast; nur die Seitenfläche **16a** ist in **Figur 3** zu sehen. Die beiden Fasen **15** ermöglichen ein leichtes Aufstecken der Keilstückpaare **9a** bis **9d**. In gleichen Abständen sind im Haltering **7** acht identische Gewindedurchgangsbohrungen **17** angeordnet. Die Stärke des Halterings **7** richtet sich nach den auf die Säule **1** zu übertragenden Dreh- und Biegemomenten der Streben **3a** bis **3d.** Der Haltering **7** wird mit einer in eine der Gewindedurchgangsbohrungen **17** eingeschraubten Madenschraube **19** als Fixierungselement, wie in **Figur 1** dargestellt, in einer Ringnut **21** der Säule **1** gehalten.

Die Keilstückpaare **9a** bis **9d** haben, wie bereits oben erwähnt, je zwei Keilstücke **11a** und **11b,** die in **Figur 4** bzw. **Figur 5** perspektivisch dargestellt sind. Jedes Keilstückpaar **9a** bis **9d** ist in Längsrichtung mit einer Bohrung **23** durchbohrt, welche um eine Toleranz größer ist als der Schaftdurchmesser der Spannschraube **13.** Beide Keilstücke **11a** und **11b** haben einander angepaßte, unter spitzen Winkel zur Bohrlochachse verlaufende Keilflächen **25** bzw. **27.**

Das Keilstück **11a** liegt, wie in **Figur 2** dargestellt, mit seiner Stirnseite **29** am Rohrmantel an. An der Stirnseite **29** befinden sich zwei durch eine Aussparung **31** voneinander distanzierte, diametral gegenüberliegende Backen **33a** und **33b.** Die Distanz der beiden Backen **33a** und **33b,** d. h. die Breite der Aussparung **31,** ist um eine Toleranz größer als die Breite des Halterings **7.** Die Stirnflächen **32a** und **32b** der Backen **33a** und **33b** sind derart konkav gewölbt, daß sie sich im montierten Zustand flächig am Säulenmantel abstützen. Der die Backen **33a** und **33b** tragende Kopfteil des Keilstücks **11a** ist derart verbreitert, daß sich ein Absatz **35** bildet, auf dem die Stirnseite des der Säule **1** zugewandten Endes der jeweiligen Strebe **3a, 3b, 3c** bzw. **3d** aufliegt. Die Verbreiterung ist, wie in **Figur 2** sichtbar, aus ästhetischen Gründen um eine Toleranz kleiner als der Querschnitt der Strebe **3a, 3b,** 3c bzw. **3d.** Rechtwinklig schließt an die Auflagefläche für die Strebe **3a, 3b, 3c** bzw. **3d** des Ansatzes **35** eine gewölbte Seitenfläche **37** an, deren Wölbung der Innenwölbung der Strebe **3a, 3b, 3c** bzw. **3d** im beabsichtigten Auflagebereich angepaßt ist.

Die durch jedes Keilstückpaar **9a** bis **9d** hindurchführende Bohrung **23** ist im Keilstück **11a** mit **23a** und im in **Figur 5** dargestellten Keilstück **11b** mit **23b** bezeichnet, welche, wie auch beim Keilstück **11a,** senkrecht zur Stirnfläche **39** verläuft. Der Durchmesser der Bohrung **23b** ist gegenüber seinem der Stirnfläche **39** benachbarten Teil stufenförmig verkleinert. Diese Innenstufe **36** erleichtert, wie unten beschrieben, das Herausnehmen des Keilstückpaares **9** aus dem Innenraum der Strebe **3.** Um den Ausgang der Bohrung **23b** ist auf der Stirnseite **39** ein ebenflächig bearbeiteter ringförmiger Ansatz **41** angeordnet, der eine einwandfreie Auflage des Schraubenkopfes der Spannschraube **13** ermöglichen soll. Der Ansatz **41** wird ausgebildet, um nicht die ganze Stirnseite **39** bearbeiten zu müssen. Rechtwinklig zur Stirnseite **39** verläuft eine gewölbte Seitenfläche **43,** deren Wölbung der Innenwölbung der Strebe **3a, 3b, 3c** bzw. **3d** im beabsichtigten Auflagebereich angepaßt ist.

Zur Befestigung z. B. der in **Figur 2** dargestellten Strebe **3d** wird der Haltering **7** auf die Säule **1** gesteckt und mit der in **Figur 1** sichtbaren Madenschraube **19** in der Nut **21** der Säule **1** gegen herunterfallen gesichert. Die Madenschraube **19** ist noch nicht in der Nut **21** festgeklemmt. Das Keilstückpaar **9d** wird mit in seine Bohrung **23** eingesteckter Spannschraube **13,** wobei der Schraubenkopf auf der Seite des Absatzes **41** des Keilstückes **11b** liegt, in das an der Säule **1** zu befestigende Strebenende eingeführt bis dieses an dem Absatz **35** anstößt. Das in der Strebe **3d** sitzende Keilpaar **9d** wird mit seinen Backen **33a** und **33b** auf den Haltering **7** am Ort einer der Gewindedurchgangsbohrungen **17** gesteckt und die Spannschraube **13** in die Gewindedurchgangsbohrung **17** eingeschraubt. Beim Einschrauben werden einerseits die gewölbten Stirnflächen **32a** und **32b** der Backen **33a** und **33b** an den Außenmantel der Säule **1** gezogen und andererseits die Keilstücke **11a** und **11b** gegeneinander auf ihren Keilflächen **25** und **27** verschoben, wobei die gewölbten Seitenflächen **37** und **43** gegen die Innenwandung der Strebe **3d** gepreßt werden. Die Strebe **3d** ist jetzt axial über die Seitenflächen **37** und **43** aufgrund der Flächenreibung kraftschlüssig und aufgrund der ovalen Strebenform mit dem analog ausgebildeten Keilstückpaar **9d** gegen Verdrehen formschlüssig verbunden. Mit ihren Backen **33a** und **33b** ist das Keilstückpaar **9d** ebenfalls formschlüssig gegen Verdrehen mit dem Haltering **7,** der aufgrund seiner Spieltoleranz ebenfalls verdrehsicher an der Säule **1** gehalten ist, verbunden. Die Strebe **3d** ist somit an der Säule **1** verdrehsicher befestigt.

Die Länge der Spannschraube **13** ist so gewählt, daß sie nicht oder nur geringfügig in die Nut **21** greift, um aus Fertigungstoleranzgründen ein einwandfreies Verspannen der Keilstücke **11a** und **11b** gegen die Strebeninnenwandung und ein einwandfreies Anpressen der Stirnseiten **32a** und **32b** an dem Säulenaußenmantel zu gewährleisten, ohne daß die Spannschraube **13** am Nutengrund ansteht.

Die Spannschraube **13** wird mit einem Steckschlüssel, der durch die Strebe **3d** in das der Säule **1** abgewandten Ende eingeführt wird, angezogen. Ist dieses Strebenende bereits an einer anderen Säule befestigt, wird der Steckschlüssel **44,** wie in **Figur 2** gestrichelt dargestellt, durch einen Schlitz **45** in der Strebe **3d** in der Nähe des zu befestigenden Endes eingeführt. Die Madenschraube **19** wird festgezogen, sobald die Streben **3a** bis **3d** in ihrer gewünschten horizontalen Lage liegen.

Zum Lösen der Befestigungseinrichtung wird in zeitlich umgekehrter Arbeitsweise, wie oben beim Zusammenbau beschrieben, vorgegangen. Nach dem Lösen der Spannschraube **13** läßt sich die Strebe **3a, 3b, 3c** bzw. **3d** von Haltering **7** abnehmen. Es kann nun geschehen, daß trotz gelöster Spannschraube **13** die Keilstücke **11a** und **11b** in der Strebe **3a, 3b, 3c** bzw. **3d** verklemmt bleiben und somit durch Schräghalten der Strebe **3a,** **3b**, **3c** bzw. **3d** nicht herausrutschen. In diesem Fall wird ein nicht dargestellter, zylindrischer Dorn, dessen Durchmesser um eine Spielpassung kleiner ist als der Durchmesser der Bohrung **23a** im Keilstück **11a,** aber größer als der der Stirnseite **39** benachbarte Durchmesser **23b** des Keilstückes **11b** verwendet. Der in die Bohrung **23** von der Stirnseite **29** aus eingeschobene Dorn steht somit am Absatz **36** an. Mit einem kräftigen Hammerschlag auf das herausstehende Ende des Dorns lassen sich beide Keilstücke **11a** und **11b** in der Strebe **3a, 3b, 3c** bzw. **3d** voneinander lösen.

Werden die Keilstücke **11a** und **11b,** der Innendurchmesser der Streben **3a** bis **3d,** die Nut **21,** der Haltering **7** und die Länge der Spannschraube **13** eng toleriert ausgeführt, so kann auf die Madenschraube **19** als Fixierungselement verzichtet werden. Die Madenschraube **19** wird dann nur noch als Montagehilfe verwendet und bei der fertig montierten Befestigungseinrichtung nicht mehr benötigt und wieder entfernt. Es lassen sich dann an einem Haltering **7** acht Streben **3** befestigen.

Anstelle den Haltering **7** als geschlossenen Ring auszuführen, kann er auch aus zwei nicht dargestellten Ringhälften bestehen, wobei sich die beiden Ringhälften bevorzugt jeweils im Bereiche einer der Gewindedurchgangsbohrungen **17** überlappen und im montierten Zustand dann durch die Madenschrauben **19** bzw. die Spannschrauben **13** oder durch eine Maden- und eine Spannschraube **19** und **13** zusammengehalten werden. Ein geteilter Haltering hat den Vorteil auch an Säulen Verwendung zu finden, welche kein freies Ende besitzen über den der Haltering schiebbar wäre.

Anstelle der Keilstückpaare **9** kann auch ein nicht dargestellter Bolzen mit einem dem Innenquerschnitt der Strebe **3a** bis **3d** angepaßten Außenquerschnitt verwendet werden, an dessen einer Stirnseite zu den Backen **33a** und **33b** analog ausgebildete Backen angeordnet sind. Analog zum Keilstückpaar **9a** bis **9d** ist auch dieser Bolzen durchbohrt, damit er mit einer Befestigungsschraube analog der Spannschraube **13** am Haltering **7** befestigbar ist. Der Bolzen ist mit einer durch die Strebenseitenwand greifenden, nicht dargestellten Schraube mit der Strebe **3a** bis **3d** formschlüssig verbindbar.

Müssen von den Streben **3a** bis **3d** keine allzu großen Gewichtskräfte auf die Säule **1** übertragen werden, kann auf die Nut **21** verzichtet werden, wobei dann hier der Haltering **7** und die an ihm befestigten Streben **3a** bis **3d** nur mittels einer oder mehrerer gegen den Säulenmantel drückender Madenschrauben **19** bzw. Spannschrauben **13** gehalten wird.

Soll eine massive Strebe mit der Säule verbunden werden, so läßt sich anstelle des oben beschriebenen Bolzens bzw. der Keilstückpaare **9a** bis **9d** ein nicht dargestelltes Rohrstück verwenden, dessen Innenquerschnitt dem Außenquerschnitt der Strebe **3a** bis **3d** angepaßt ist und an dessen einem Ende entsprechend der Aussparung **31** diametral gegenüberliegende Rohrwandstücke nach innen gebogen sind. Die nach innen gebogenen Wandstücke haben zur Rohrstückachse je eine zentrische Aussparung, welche um eine Toleranz größer ist als der Durchmesser einer Befestigungsschraube, welche durch die Aussparungen hindurch in die Gewindedurchgangsbohrung **17** des Halterings **7** zur Befestigung des Rohrstückes am diesem **7** greift. Die umgebogenen Wandstücke dienen gleichzeitig als Anschlag für die Stirnseite des an der Säule **1** zu befestigenden Strebenendes. Als Backen **33a** und **33b** wirken dann die diametral gegenüberliegenden durch den Ausschnitt getrennten Rohrlaschen. Das Rohrstück wird mit einer durch eine Bohrung in der Rohrwandung gesteckten Schraube, die in eine Gewindebohrung in der Strebe greift, befestigt. Gleichartig lassen sich auch hohle Streben **3a** bis **3d** befestigen.

Durch den Haltering **7** der erfindungsgemäßen Befestigungseinrichtung lassen sich vorteilhaft Streben an einer Säule befestigen, welche große Dreh- und Biegemomente auf diese übertragen müssen. Als besonders vorteilhaft hat sich erwiesen, daß die genaue horizontale Lager der Strebe bzw. Streben durch Verdrehen des Halterings **7** einstellbar ist. Da die Befestigung der Streben **3a bis 3d** nur am Säulenaußenmantel erfolgt, müssen keine besonderen Anforderungen an den Innenmantel der Säule **1** eingehalten werden; die Befestigungseinrichtung läßt sich auch an einer massiven Säule anbringen.

## Patentansprüche

1. Befestigungseinrichtung zur lösbaren Befestigung wenigstens eines Strebenendes am Mantel einer runden Säule **(1)** mit einem den Mantel umschließenden Haltering **(7)** und einem das Strebenende mit dem Haltering **(7)** verbindenden zweibackigen Verbindungselement **(9a** **-** **9d)**, **dadurch gekennzeichnet**, daß
das Verbindungselement mit den Stirnflächen **(32a, 32b)** der Backen **(33a, 33b),** welche die beiden axial gegenüberliegenden freien Umfangsflächen des Halterings **(7**) im Befestigungsbereich umgreifen, auf dem Säulenmantel gepreßt ist, wobei
die Stirnflächen **(32a, 32b)** dem Profil des Säulenmantels angepaßt für eine flächige, abstützende Auflage konkav gewölbt ausgebildet sind.

2. Befestigungseinrichtung nach Anspruch 1, **dadurch** **gekennzeichnet,** daß
die beiden Backen **(33a, 33b)** an die beiden axial gegenüberliegenden Umfangsflächen **(16a, 16b)** des Halterings **(7)** anzulegen sind, um
das Verbindungselement **(9a** **- 9d)** drehfest am Haltering **(7)** zu halten.

3. Befestigungseinrichtung nach Anspruch 1 oder 2 für eine hohle Strebe **(3a - 3d)**, **dadurch gekennzeichnet,** daß
das Verbindungselement **(9a - 9d)** ein in Längsrichtung durchbohrtes Keilstückpaar **(9a - 9d)** mit einem durch die Bohrung **(23)** gesteckten Organ **(13)** aufweist,
das am Haltering **(7)** befestigbar und mittels dem die Keilstücke **(11a**, **11b)** **a**xial gegeneinander verschiebbar sind, so daß
deren einander abgewandten, der Strebeninnenwandung angepaßt ausgebildeten Mantelflächenbereiche **(37, 43)** an die Strebeninnenwandung angepreßt werden.

4. Befestigungseinrichtung nach Anspruch 3, **dadurch** **gekennzeichnet,** daß
das kraftausübende Organ eine Schraube **(13)** ist und
der Haltering **(7)** dem Gewinde der Schraube **(13)** angepaßte radiale Gewindebohrungen **(17)** hat, wobei
die Schraube **(13)** beim Einschrauben in eine der Gewindebohrungen **(17)** die Keilstücke **(11a, 11b)** axial gegeneinander verschiebt.

5. Befestigungseinrichtung nach Anspruch 3 oder 4 für unrunde Streben **(3a - 3d)**, **dadurch gekennzeichnet**, daß
der Querschnitt des Keilstückpaars **(9a** - **9d)** dem Innenquerschnitt der Strebe **(3a - 3d)** annähernd angepaßt ist.

6. Befestigungseinrichtung nach einem der Ansprüche 1 bis 5, **dadurch gekennzeichnet,** daß
der Haltering **(7)** zur Befestigung mehrerer, in wählbaren Winkelabständen voneinander an ihm anbringbarer Verbindungselemente **(9a - 9d)** ausgebildet ist.

7. Befestigungseinrichtung nach einem der Ansprüche 1 bis 6, **dadurch gekennzeichnet,** daß
der Haltering **(7)** mindestens ein Fixierungselement, bevorzugt eine in ein radiales Gewindeloch **(17)** des Halterings **(7)** einschraubbare Schraube **(19)**, hat, durch welches
er gegen Verdrehen und axiales Verschieben an der Säule **(1)** sicherbar ist.

8. Säule **(1)** zum Halten von Streben **(3a - 3d)** an ihren Enden mittels einer Befestigungseinrichtung nach einem der Ansprüche 1 bis 7, **gekennzeichnet durch**
mindestens eine umlaufende Außennut **(21)**, in die
ein im Haltering **(7)** verstellbares Fixierungselement **(19)** formschlüssig greift, um
die axiale Lage des Halterings **(7)** auf der Säule **(1)** lösbar zu fixieren.

9. Strebe **(3a** - **3d)** zur Befestigung mit ihrem Ende am Mantel einer Säule **(1)** mit einer Befestigungseinrichtung nach Anspruch 5, **gekennzeichnet durch** einen ovalen Querschnitt zum
formschlüssigen und drehfesten Verbinden mit dem Verbindungselement **(9a - 9d)**.

## Claims

1. Fastening device for the detachable fastening of at least one strut end on the casing of a circular column (1), having a retaining ring (7) surrounding the casing and a connection element (9a-9d) with two cheek pieces, which connects the strut end to the retaining ring (7), characterised in that the connection element is pressed onto the column casing with the end faces (32a, 32b) of the cheek pieces (33a, 33b), which surround the two axially opposite free peripheral surfaces of the retaining ring (7) in the fastening area, the end faces (32a, 32b) being shaped with a concave curvature adapted to the profile of the column casing to abut thereon in a flat, supporting manner.

2. Fastening device according to Claim 1, characterised in that the two cheek pieces (33a, 33b) are to be laid against the two axially opposite peripheral surfaces (16a, 16b) of the retaining ring (7), in order to retain the connection element (9a-9d) on the retaining ring (7) in a manner secure against rotation.

3. Fastening device according to Claim 1 or Claim 2 for a hollow strut (3a-3d), characterised in that the connection element (9a-9d) comprises a pair of wedge-shaped pieces (9a-9d) bored through in the longitudinal direction and having a member (13) which is inserted through the bore (23) and which can be fastened on the retaining ring (7) and by means of which the wedge-shaped pieces (11a, 11b) can be displaced axially in relation to one another; such that the generated surface areas (37, 43) thereof which are turned away from one another and are shaped so as to be adapted to the inner wall of the strut can be pressed against the inner wall of the strut.

4. Fastening device according to Claim 3, characterised in that the force-exerting member is a screw (13), and the retaining ring (7) has radial threaded bores (17) adapted to the thread of the screw (13), the screw (13) displacing the wedge-shaped pieces (11a, 11b) axially towards one another when being screwed into one of the threaded bores (17).

5. Fastening device according to Claim 3 or Claim 4 for non-circular struts (3a-3d), characterised in that the cross-section of the pair of wedge-shaped pieces (9a-9d) is approximately adapted to the inner cross-section of the strut (3a-3d).

6. Fastening device according to any one of Claims 1 to 5, characterised in that the retaining ring (7) is formed so as to secure a plurality of connection elements (9a-9d) which can be mounted thereon at optional angular spacings from one another.

7. Fastening device according to any one of Claims 1 to 6, characterised in that the retaining ring (7) has at least one securing element, preferably a screw (19) which can be screwed into a radial threaded hole (17) in the retaining ring (7), by means of which the retaining ring can be secured against rotation and axial displacement on the column (1).

8. A column (1) for retaining struts (3a-3d) at their ends by means of a fastening device according to any one of Claims 1 to 7; characterised by at least one peripheral external groove (21), in which a securing element (19), which can be adjusted in the retaining ring, engages in a form-locking manner, in order to secure the axial position of the retaining ring (7) on the column (1) in a detachable manner.

9. Strut (3a-3d) for fastening at the end thereof on the casing of a column (1) with a fastening device according to Claim 5, characterised by an oval cross-section for connection to the connecting element (9a-9d) in a manner which is form-locking and secure against rotation.

## Revendications

1. Dispositif de fixation, pour la liaison démontable d'au moins une extrémité d'un tirant sur l'enveloppe d'une colonne (1) cylindrique, avec une bague de maintien (7), entourant l'enveloppe et un élément de liaison (9a à 9d) à deux mâchoires, reliant l'extrémité du tirant à la bague de maintien (7), caractérisé en ce que
l'élément de liaison est appliqué sur l'enveloppe de la colonne à l'aide des faces frontales (32a, 32b) des mâchoires (33a, 33b), qui entourent les deux surfaces périphériques libres, axialement opposées, de la bague de maintien (7) dans la zone de fixation, et en ce que
les faces frontales (32a, 32b) sont incurvées de façon concave et adaptées au profil de l'enveloppe de la colonne, pour obtenir un appui sur toute sa surface.

2. Dispositif de fixation selon la revendication 1, caractérisé en ce que les deux mâchoires (33a, 33b) sont destinées à être appliquées sur les deux surfaces périphériques (16a, 16b) axialement opposées de la bague de maintien (7), afin de maintenir l'élément de liaison (9a, à 9d) bloqué en rotation sur cette bague de maintien (7).

3. Dispositif de fixation selon la revendication 1 ou 2, pour un tirant (3a à 3d) creux, caractérisé en ce que
l'élément de liaison (9a à 9d) présente une paire de pièces en coins (9a à 9d), traversées longitudinalement par un perçage, avec un organe (13) enfiché dans ce perçage (23),
l'organe (13) étant susceptible d'être fixé sur la bague de maintien (7) et permettant aux pièces en coins (11a, 11b) d'être déplacées axialement l'une par rapport à l'autre,
de sorte que ses zones d'enveloppe (37, 43), opposées l'une à l'autre, réalisées de façon adaptée à la paroi intérieure du tirant, soient appliquées contre la paroi intérieure de celui-ci.

4. Dispositif de fixation selon la revendication 3, caractérisé en ce que
l'organe exerçant une force est une vis (13) et en ce que
la bague de maintien (7) présente des trous taraudés (17) radiaux, adaptés au filetage de la vis (13),
cette vis (13) déplaçant axialement l'une vers l'autre les pièces en coins (11a, 11b) lors de son vissage dans l'un des trous taraudés (17).

5. Dispositif de fixation selon la revendication 3 ou 4, pour des tirants non cylindriques (3a à 3d), caractérisé en ce que
la section transversale de la paire de pièces en coins (9a à 9d) est approximativement adaptée à la section transversale intérieure des tirants (3a à 3d).

6. Dispositif de fixation selon l'une des revendications 1 à 5, caractérisé en ce que
la bague de maintien (7) est réalisée en vue de la fixation de plusieurs éléments de liaison (9a à 9d), susceptibles d'être montés sur lui avec des espacements angulaires mutuels choisis à volonté.

7. Dispositif de fixation selon l'une des revendications 1 à 6, caractérisé en ce que
la bague de maintien (7) comporte au moins un élément de fixation, de préférence une vis (19), pouvant être vissée dans un trou taraudé (17) de cette bague au moyen duquel elle peut être bloquée sur la colonne (1) de façon à empêcher toute rotation et tout déplacement axial.

8. Colonne (1) pour la fixation de tirants (3a à 3d) à leurs extrémités, au moyen d'un dispositif de fixation selon l'une des revendications 1 à 7, caractérisée par
au moins une gorge extérieure (21),
dans laquelle s'engage, avec ajustement de forme, un élément de fixation (19) pouvant être déplacé en vue de son réglage dans la bague de maintien (7),
afin de fixer de façon amovible la position axiale de la bague de maintien (7) sur la colonne (1).

9. Tirants (3a à 3d) prévus pour être fixés par leur extrémité sur l'enveloppe d'une colonne (1), avec un dispositif de fixation selon la revendication 5, caractérisés par
une section transversale ovale
pour assurer une liaison par ajustement de forme, assujettie en rotation avec l'élément de liaison (9a à 9d).
